# EUROPEAN PATENT APPLICATION

(11) **EP 4 718 433 A1**
(43) Date of publication of application: **01.04.2026**
(21) Application number: 25189317.8
(22) Date of filing: 14.07.2025
(51) Int. Cl.: G09G 5/00

(54) **ZERO-LATENCY SWITCHING BETWEEN DIFFERENT VIDEO RESOLUTIONS**

(30) Priority: 26.09.2024 US 202418896952
(71) Applicant: INTEL Corporation, Santa Clara, CA 95054 (US)
(72) Inventor: WOOSTER, Roland, Folsom, 95630 (US); SAMEER KALATHIL, Perazhi, Folsom, 95630 (US); ANSARI, Nausheen, Folsom, 95630 (US)
(74) Representative: Viering, Jentschura & Partner mbB Patent- und Rechtsanwälte

(57) **Abstract**

Disclosed herein is zero-latency switching between two resolution and frame rate modes. The system includes receiving a trigger to switch a video data stream of frames between a first resolution and frame rate mode and a second resolution and frame rate mode. The system also includes switching, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

## Description

### Technical Field

The disclosure relates generally to switching the resolution and frame rate mode of a video source, and in particular, to a video stream that may dynamically switch resolution and frame rate modes for an active display.

### Background

Advances in video display equipment means that displays often support numerous different high-definition (HD) progressive scanning display modes, such as full HD (1080p), Quad HD (QHD), ultra-HD (4K), and beyond. With higher resolution, displays have a richness in depth, detail, and perspective that provides a life-like quality to the image. However, there is often a trade-off among resolution, frame rate, and other factors. As the resolution increases, a higher volume of data is transferred within each frame, placing higher demands on processing capabilities and the transfer medium. As a result, in higher resolution display modes, compression may be applied to decrease the amount of data transferred over a limited bandwidth or the frame rate may need to be lower so as to accommodate the processing of the larger-sized frames of data. Higher compression has a negative impact on quality (artifacts, blurring, errors, etc.), while lower frame rates have a negative impact on motion (e.g., motion may become blurry, choppy/jerky, there may be a perceived lack of responsiveness, etc.), as examples. As a result, many video displays support various different resolutions and/or different frame rates, depending on how the video display is being used. However, switching between different video display modes typically interrupts the video feed while the video display re-synchronizes to the new resolution and frame rate mode of the video source. This mode switching typically results in a paused/delayed video feed, screen blanking, and/or dropped frames.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows a pictorial representation of a 4K frame and a 1080p frame with respect to its horizonal and vertical pixels that include both active pixels and blanking pixels;
FIG. 2 illustrates an example of the blanking phenomenon with respect to a video stream that starts with frames in a first resolution and frame rate mode and switches to a second resolution and frame rate mode;
FIG. 3 provides an example of zero-latency switching, where a video stream starts with frames in a first resolution and frame rate mode and switches to a second resolution without a delay;
FIG. 4 shows a side by side example visual representation of a 4K frame compared to two blank-buffered 1080p frames that, together, have the same total pixel clock as the 4K frame;
FIG. 5 depicts example flows of a video stream from a game to the display panel in both a typical system and in a system that supports zero-latency switching ("smooth mode");
FIG. 6 illustrates an exemplary schematic drawing of a device for providing a zero-latency mode switching of a video data stream; and
FIG. 7 depicts an exemplary schematic flow diagram of a method for zero-latency mode switching of a video data stream.

### Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g.*, one, two, three, four, [...], etc., where "[...]" means that such a series may continue to any higher number). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (*e.g.*, two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.*, provided as a file, a portion of a file, a set of files, a signal or stream, a portion of a signal or stream, a set of signals or streams, and the like. Further, the term "data" may also be used to mean a reference to information, *e.g*., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.*, any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g*., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g*., the transmission of radio signals) and logical transmission (*e.g.*, the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

As used herein, the terms "display," "monitor," "television," "video display," "screen," etc. refer to a hardware device that illuminates in order to display a series of images or frames. The illumination may be direct (such as with a cathode ray tube (CRT) display, a liquid crystal (LCD) display, light-emitting diode (LED) display, etc.) or indirect (such as with a projector or other projection methods). As should be understood, most displays are configured to receive a stream of digital video information that represents a set of continuous video frames, where each frame may contain a digital representation of the image to be displayed (e.g., "active" pixels in a horizonal and vertical dimension of the active/visible portion of the frame) and control or other information that is not part of the active/visible portion of the image to be displayed but nevertheless make up the overall size of the frame (e.g., horizontal/vertical blanking of lines, columns, pixels, etc.).

Images may have different resolution sizes which may be categorized based on the number of active pixels in the active horizonal and active vertical space (e.g., according to the Reduced Blanking 3 (RB3) standard, 1080p has 1920 pixels in the active horizontal space and 1080 pixels in the active vertical space whereas 4K has 3840 pixels in the active horizonal space and 2160 pixels in the active vertical space). In addition to the image pixels (or active pixels), the frame may also contain horizontal/vertical blanking pixels, which, together with the image pixels, make up the total pixel size of the frame. Generally, the larger the resolution, the larger the total pixel size of the frame (dominated by the image pixels). The frames are organized into a series of frames that form a video data stream, where the time between consecutive frames defines the frame rate or refresh rate (RR). In this manner, the video data stream has a frame rate or refresh rate that is defined by the number of frames per second (e.g., in Hertz), where a high-performance gaming 4K stream may have a refresh rate of 240 Hz and a high-performance gaming 1080p stream may have a refresh rate of 480 Hz.

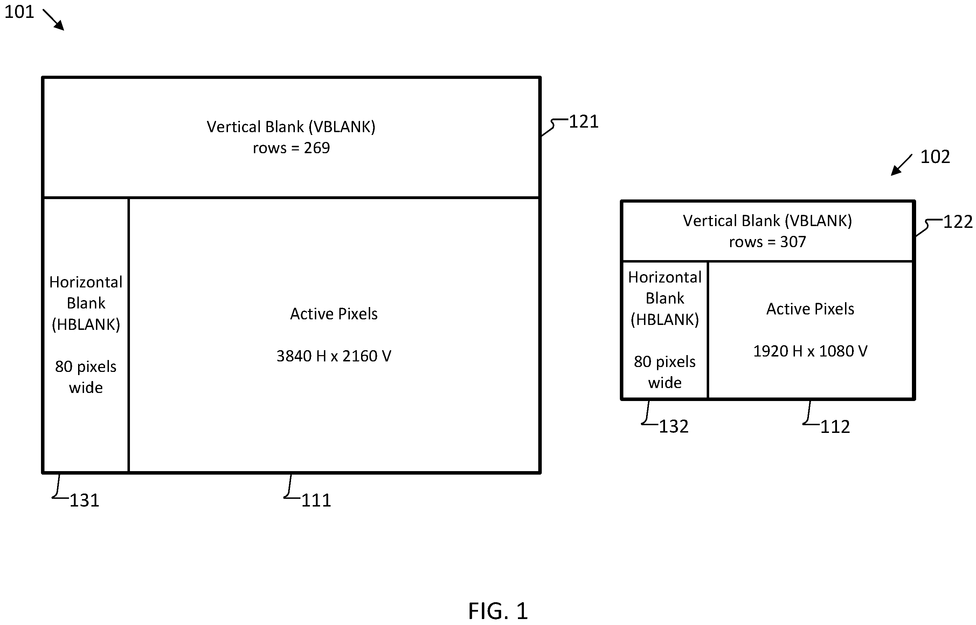

While RB3 resolution and clock timing is referenced in the examples throughout this disclosure, this disclosure is applicable to any types of resolutions and clock timings for video streams, including standards promulgated by the Video Electronics Standards Association (VESA, such as RB3), the Consumer Electronics Associate (CEA, such as CEA-861), or other streaming interfaces. FIG. 1 shows a pictorial representation of a 4K frame and a 1080p frame with respect to its horizonal and vertical pixels that include both active pixels and blanking pixels.

In FIG. 1, frame 101 represents a 4K frame (according to the RB3 standard), where it contains an array of active pixels 111, an array of vertical blank (VBLANK) pixels 121, and an array of horizontal blank (HBLANK) pixels 131, where the total number of pixels (active and blanking) in frame 101 is 3920. This total number of pixels is made up of the array of active pixels 111 that has 3840 horizontal pixels and 2160 vertical pixels, the pixels in the array of VBLANK pixels 121, and the pixels in the array of HBLANK pixels 131. By contrast, frame 102 represents a 1080p frame (according to the RB3 standard), where it contains an array of active pixels 112, an array of vertical blank (VBLANK) pixels 122, and an array of horizontal blank (HBLANK) pixels 132, where the total number of pixels (active and blanking) in frame 102 is 2000. This total number of pixels is made up of the array of active pixels 112 that have 1920 horizontal pixels and 1080 vertical pixels, the pixels in the array of VBLANK pixels 121, and the pixels in the array of HBLANK pixels 131.

As noted above, video displays often support various different resolutions, frame rates, and combinations thereof, and the video display may automatically switch between these different modes, depending on what type of video stream is supplied. A source of a video stream (e.g., a computer, a gaming system, a digital media player, a graphics processing unit, etc.) may provide different options/settings for generating and/or suppling the video stream to the screen, display, monitor, etc., and the user may wish to switch among various modes, depending on considerations such as what content is being viewed, the size of the display, energy usage, etc. For example, a graphics designer that is using a relatively static (in terms of motion on the screen) application may prefer a mode with a high resolution as opposed to a higher frame rate because depth, detail, and perspective may be more important than high quality motion. Thus, the graphics designer may set their video output mode to one with a high resolution and a lower refresh rate. On the other hand, a gamer that is playing a highly-active, multi-player game or streaming a fast-paced sporting event (with highly dynamic motion) may prefer a mode that supports real-time, quality motion as opposed to the visual depth, detail, and perspective provided by higher resolutions. Thus, such a user may set their video output to a mode with a higher refresh rate, even if the tradeoff means a lower resolution.

Switching the display mode is often triggered while the display is on, meaning that a user may trigger a change in the resolution and frame rate mode of the video stream from a mode with a high resolution (e.g., and a lower frame rate) to a mode with a lower resolution (e.g., and a higher frame rate) while the video display is actively displaying the content of the video stream. The drawback of such active switching is that switching to a different resolution and frame rate mode typically requires some time for the display (receiving the stream and displaying the video) to recognize, react to, and re-synchronize to the new format of the video stream. As a result, this may lead to a paused/delayed video feed, screen blanking, and/or dropped frames.

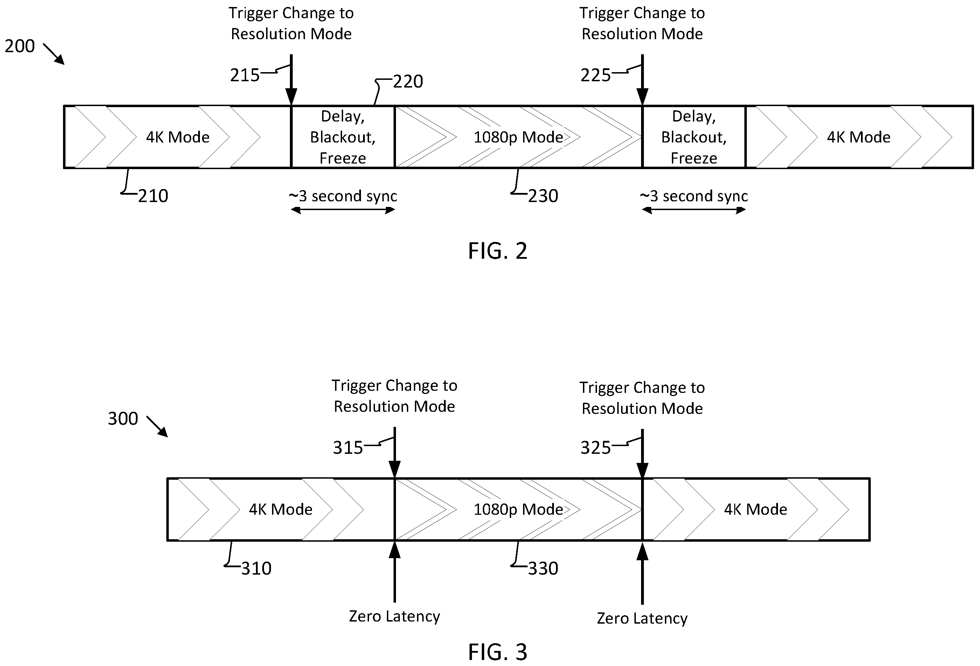

This blanking phenomenon is shown in FIG. 2, which illustrates a video stream 200 that starts with supplying frames 210 in a first resolution and frame rate mode (e.g., 4K at 240 Hz) and switches to a second resolution and frame rate mode. The user may (typically manually) trigger a change to the resolution and frame rate mode (e.g., if the video stream is from a computer, the video driver settings may be changed to a new resolution or the user may changes to a different application that outputs the video stream in a different video resolution and frame rate mode). The second resolution and frame rate mode may be, for example, 1080p at 420 Hz, which produces frames 230 at the second resolution and frame rate mode. In order for the display to synchronize to the new video stream, there is typically a short delay 220 (e.g., about 3 seconds) during which the image frames of the video stream cannot be displayed, resulting in a delayed sequence, a frozen image, or a blacked out screen. While some solutions may minimize the visual impact (e.g., by buffering frames, generating pseudo frames, etc.), there still may be an unacceptable lag in the display of the frames during this synchronization period. This problem repeats in the same manner if there is another trigger (e.g., trigger 225) that switches back to the first resolution and frame rate mode.

In many situations, the pause, delay, blanking, or lost frames, which may be on the order of a few seconds (e.g., typically about three seconds), may often be acceptable. For example, if a user is switching between entirely different uses, for example from a graphics design application (using high resolution and a lower frame rate) to a gaming application (using lower resolution and a higher frame rate), the delay caused by the switching may be acceptable, because the user needs to switch between applications or launch a new application, which will also take some time.

However, in a dynamic situation, where, for example, the application providing the video feed may adaptively change the resolution and frame rate mode in real-time over the course of the feed, even a short delay caused by the switching may be noticed by the user. This could be relatively disruptive for time-critical viewing, such as in fast-paced gaming applications, where a three second delay could create substantial disadvantages in the gaming experience. Using a first-person-shooter game as an example, when there are no enemies within range, the viewer may prefer to enjoy a richly-displayed image at high resolution because the lower refresh rate would be acceptable. As soon as an enemy arrives in the scene, the player may prefer a lower resolution in favor of better quality motion. As should be appreciated in this context, even a three second delay to switch modes would be a disaster to a competitive gamer in an active battle. Thus, this type of delay may make dynamic mode switching (e.g., dynamically based on the video content-generator's preferences/settings) undesirable to content providers, especially for content that may occasionally demand very low latency. In the context of a game content-provider, for example, it may be undesirable for the game to dynamically adapt the streamed resolution/refresh rate based on the active content of the game (e.g., primarily scenery/static content versus high-speed, dynamic content) because the switching delay would be unacceptable to the user.

Unlike current ways of switching the resolution and frame rate mode that cause delays in an active video feed, the disclosed zero-latency switching offers a delay-free way to switch between different resolution and frame rate modes in an active video feed. This means that the active video stream may not be delayed, blacked-out, paused, dropped, etc. during the mode switch. As a result, content providers may offer seamless, dynamic resolution and frame rate mode switching (with zero latency), which may be performed in real-time and may be based on the video content-generator's preferences/settings and/or based on the content being provided.

An example of the disclosed zero-latency switching is shown in FIG. 3, which shows a video stream 300 that starts with frames 310 in a first resolution and frame rate mode (e.g., 4K at 240 Hz). A trigger 315 may request a change to the resolution and frame rate mode to a second resolution and frame rate mode (e.g., 1080p at 420 Hz) that produces frames 330 in the second resolution and frame rate mode. Because the frames are formatted to have the same pixel clock data rate, as discussed in more detail below, the display does not need to synchronize to the new resolution and frame rate mode. As such, there is no delay caused by switching resolution and frame rate modes. When switching back to the first mode (e.g., based on trigger 325), the new frames also have a format with the same pixel clock data rate, which prevents the display from having to synchronize in the new resolution and frame rate mode. Thus, the zero-latency switching solves the problem of the typical frame delay caused by switching resolution and frame rate modes.

The disclosed zero-latency switching may be realized by setting the active area to the new resolution (e.g., the visible/active areas of the frame (e.g., active horizontal/vertical pixels)) and then adjusting the HBLANK and/or VBLANK of the frame so as to maintain a constant pixel clock (PC) data rate for the stream and the same total horizontal pixel width (H-Total) for each frame. By maintaining the PC data rate and H-Total, there is no need for the display to resynchronize to the stream, which, as discussed above, is usually the case when the resolution and frame rate mode changes. Ultimately, zero-latency switching means sending the same total number of pixels over the same amount of time (e.g., total number of pixels/second).

The total number of pixels sent over time in different modes may be determined based on the refresh rate multiplied by the pixel size of the frame (e.g., H-Total by-Total), thus: *PC = RR * HTotal * VTotal.* And as noted earlier, the total number of pixels includes active pixels and blanking pixels (e.g., *HTotal = HActive + HBlank* and *VTotal = V Active + VBlank*), as exemplified in FIG. 1. Thus, the PC and *HTotal* may be maintained as constants by, after accounting for the active pixel resolution and frame rate in the new mode, padding the *HBlank* and/or *VBlank* with additional blanking so as to arrive at the same pixel clock data rate and the same *HTotal* for the frames in the new mode as had existed for the prior mode.

To provide an example of this in the context of a mode switch from 4K resolution at a refresh rate of 240 Hz to 1080p resolution at a refresh rate of 480 Hz, the pixel sizes and clock timings are provided in the table below (for RB3):

| Mode | *HActive* | *VActive* | *HTotal* | *VTotal* | PC |
|---|---|---|---|---|---|
| 4K @ 240 Hz | 3840 | 2160 | 3920 | 2429 | 2285.889 |
| 1080p @ 480 Hz | 1920 | 1080 | 2000 | 1387 | 1331.920 |

To provide zero-latency switching from 4K to 1080p (an vice versa), the *HBlank* may be padded in each 1080p frame (keeping in mind that, at the new refresh rate, twice as many frames are sent over time), so that the total pixels sent over time remains that same. In other words, the pixel clock data rate remains constant and the total number of horizontal pixels (*HTotal = HActive + HBlank*) of the frame stays the same. For this example of a zero-latency modified data stream, the pixel sizes and clock timings are provided in the table below:

| Mode | *HActive* | *VActive* | *HTotal* | *VTotal* | PC |
|---|---|---|---|---|---|
| 4K @ 240 Hz | 3840 | 2160 | 3920 | 2430 | 2286.144 |
| 1080p @ 480 Hz | 1920 | 1080 | 3920 | 1215 | 2286.144 |

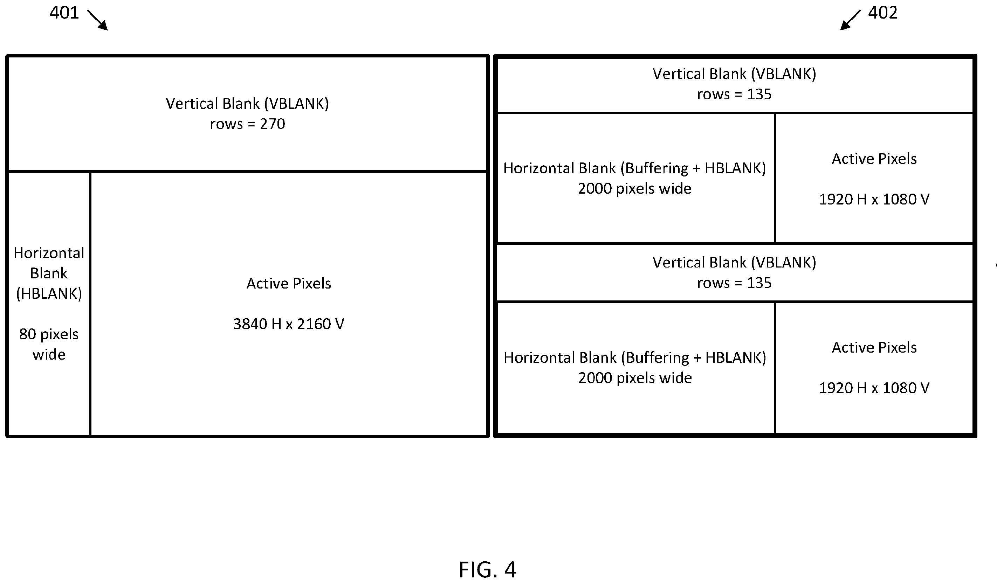

Due to the constant PC and same H-Total, the resolution and frame rate mode may change dynamically and in real-time without causing a reset or synchronization delay when switching between modes. The example above is represented graphically in FIG. 4, where two blank-buffered 1080p frames 402 have the same pixel clock as the single 4K frame 401 (visually represented, they have the same pixel clock or total "area"). The two blank-buffered 1080p frames 402, operating at double the refresh rate and, therefore, fit exactly into the same pixel clock timing as the single 4K frame 401. More succinctly, the zero-latency-switching data stream may dynamically switch modes by populating a frame with either: (1) a 4K pixel width of 3840 pixels (e.g., a normal 4K mode) or (2) a 1080p active area (visible area) having a 1920 pixel width by 1080 pixel height and buffering/filling longer H-Blanks/V-Blanks to arrive at a 4K pixel width (e.g., a modified 1080p mode). This provides the same H-Total in both modes and keeps the pixel clock data rate the same to remain synchronized with the display. As should be clear, this type of buffering/filling the 1080p frames with additional H-Blanks is different from scaling a 1080p active area to a 2160p active area. Rather, in the zero-latency-switching data stream, the stream contains a 1080p active area that is sent at twice the refresh rate as compared to that of a scaled-up 2160p frame.

As should be understood, a zero-latency-switching data stream may be particularly useful for use with adaptive synchronization displays (e.g., Adaptive Sync(AS), variable refresh rate (VRR), etc.) that may receive communications from the source of the video stream to inform the display as to the new refresh rate. This may be accomplished using, for example, AS Supplemental DisplayPort (AS SDP) metadata, or other similar metadata schemes. In such schemes, the source may communicate the video timings/metadata to the display on a frame-by-frame basis, typically with metadata embedded in the frame (e.g., within pixel space reserved for V-Blank or H-Blank pixels). With reference to FIG. 1, this would occur in the VBLANK pixels 121, 122 and/or the HBLANK pixels 131, 132. This same type of metadata signaling mechanism may be used with the zero-latency-switching data stream to indicate the change in resolution and frame rate mode from one frame to the next, so as to communicate the refresh rate and the corresponding sizes of additional H-Blank and/or V-Blank in the modified frames for zero-latency-switching.

As should be appreciated, the above is merely one example of two different resolution and frame rate modes (4K at 240 Hz and 1080p at 480 Hz) that may be seamlessly switched in a zero-latency-switching data stream, and this same type of H-Blank and/or V-Blank buffering may be used to seamlessly switch between other resolution and frame rate modes. For example, one resolution and frame rate mode may be 4K at 120 Hz and a second resolution and frame rate mode may be 720p at 360 Hz. In this case, the data stream may be modified for zero-latency switching between the two modes by sending three 720p frames with sufficient blank buffering such that a total number of pixels in the modified set of three 720p frames is the same as the total number of pixels in a single 4K frame, resulting in the same pixel clock data rate. This may be expanded in a similar manner to other mode combinations of resolution and refresh rate that are multiples of one another (e.g. double, triple, etc.). Another example would be switching between 4K+, which has an active area of 3840 by 2400 pixels, and 1200P, which as an active area of 1920 by 1200 pixels, where the 1200P frames could be modified to have the same pixel clock data rate and total horizontal pixel width.

The zero-latency-switching discussed above may be utilized by video source providers to dynamically adjust the video feed based on triggers that occur when operating conditions change or video stream requirements change. For example, an operating system may dynamically trigger mode-switching for its feed to the display/output ports based on power requirements, user policies, application-specific requirements, or the nature of the video content itself. Even if content is actively being viewed by the user, the zero-latency-switching will not cause a delay, cause blanking, or result in lost frames that may otherwise compromise time-critical applications.

Content providers that generate or provide video content streams, such as a game provider that uses a game engine to generate video streams with a specific resolution (e.g., that may be different from the native resolution of the computing display and scaled-up or scaled-down to the native resolution), may utilize zero-latency-switching to seamlessly and dynamically adjust the resolution and frame rate mode based on the type of content it is providing or other triggers that may prompt a change in resolution and frame rate mode. For example, the content provider may determine that a display is capable of supporting zero-latency-switching (e.g., based on a handshaking protocol or through user preferences) and may generate its video stream with different resolution and frame rate modes based on the type of content it is actively providing (e.g., the type of content serves as a trigger to change resolution and frame rate modes). For example, a game provider might generate slow-moving, panoramic scenes with a high-resolution and low-frame rate mode while generating action-packed scenes in a low-resolution and high-frame rate mode, utilizing lower/higher quality buffers (e.g., swap chains) and utilizing the variable refresh rate (VRR) presentation capability of the display to present the frames in different modes (e.g., higher/lower refresh rates, respectively). By using the zero-latency switching, there would be no blanking, delays, or frozen scenes that would otherwise negatively impact the user's ability to enjoy the game.

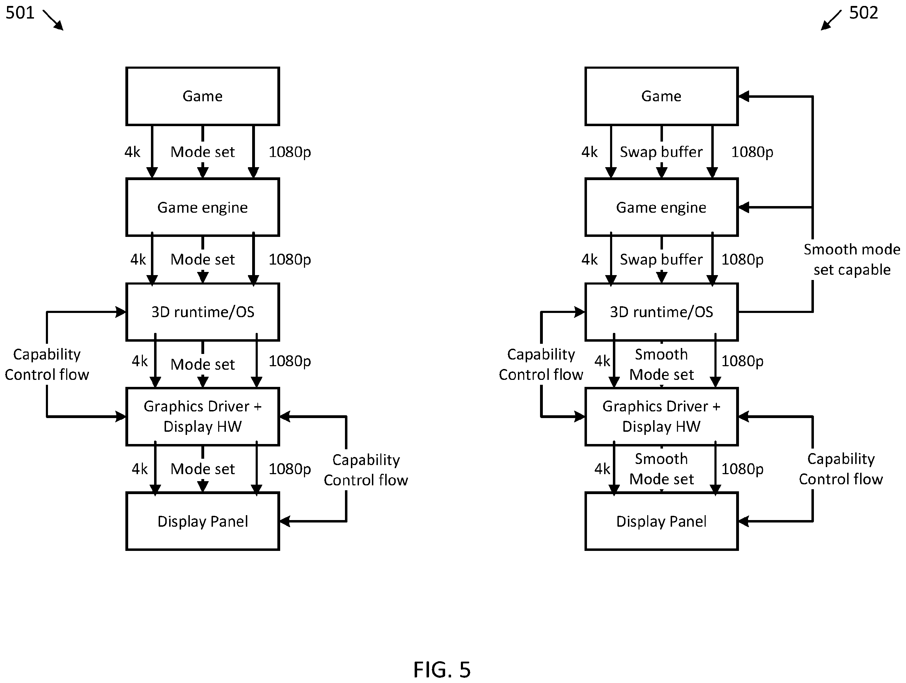

An example comparison of example flows of a video stream that comes from a game and is sourced to the display panel is shown in FIG. 5. Flow 501 shows a typical system in which the mode (e.g., 4K or 1080p) is set by changing a configuration setting in the game and then generating and transmitting the corresponding video stream to the display panel. Changing the mode between 4K and 1080p with the mode set requires the display to resynchronize to the resolution of the new stream, causing blanking, delays, or freezing. Flow 502 shows how a game may use zero-latency switching ("smooth mode") to provide a video stream to the display in a manner that does not cause blanking, delays, or freezing. Changing the mode between 4K and 1080p with the "smooth mode set" to indicate that the formatting of the 1080p frames is such that they have the same pixel clock data rate as the 4K frames, and the display need not blank, delay, or freeze to resynchronize to the resolution of the new stream.

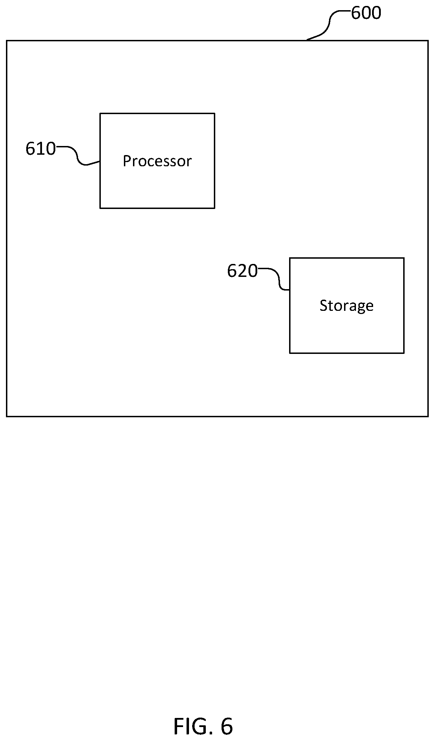

FIG. 6 is a schematic drawing illustrating a device 600 for providing a zero-latency mode switching of a video data stream. The device 600 may include any of the features discussed above with respect to the zero-latency mode switching and any of FIGs. 1-5. FIG. 6 may be implemented as a device, a system, a method, and/or a computer readable medium that, when executed, provides the features of the zero-latency mode switching discussed above. It should be understood that device 600 is only an example, and other configurations may be possible that include, for example, different components or additional components.

Device 600 includes a processor 610 connected to storage 620. Processor 610 is configured to receive a trigger to switch a (e.g., continuous) video data stream of frames between a first resolution and frame rate mode and a second resolution and frame rate mode. Processor 610 is also configured switch, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

Furthermore, in addition to or in combination with any of the features described in this or the preceding paragraph with respect to device 600, the second resolution and frame rate mode may have a refresh rate that is twice that of the first resolution and frame rate mode. Furthermore, in addition to or in combination with any of the features described in this or the preceding paragraph, the first resolution and frame rate mode may have an active horizontal pixel width that is twice that of the second resolution and frame rate mode, wherein the first resolution and frame rate mode may have an active vertical pixel height that is twice that of the second resolution and frame rate mode. Furthermore, in addition to or in combination with any of the features described in this or the preceding paragraph, the total horizontal pixel width of the video data stream in the first resolution and frame rate mode may include a first active horizontal pixel width and a first horizontal blank pixel width, wherein the total horizontal pixel width of the video data stream in the second resolution and frame rate mode may include a second active horizontal pixel width that is half the first horizontal blank pixel width and a second horizontal blank pixel width that is greater than the first horizontal blank pixel width.

Furthermore, in addition to or in combination with any of the features described in this or the preceding two paragraphs with respect to device 600, the first active horizontal pixel width may be 3840 pixels and the first horizontal blank pixel width may be 80 pixels, wherein the second active horizontal pixel width may be 1920 pixels and the first horizontal blank pixel width may be 2000 pixels. Furthermore, in addition to or in combination with any of the features described in this or the preceding two paragraphs, the first resolution and frame rate mode may include 4K resolution at a refresh rate of 240 Hz, wherein the second resolution and frame rate mode may include 1080p resolution at a refresh rate of 480 Hz. Furthermore, in addition to or in combination with any of the features described in this or the preceding two paragraphs, processor 610 may be configured to switch the video data stream between the first resolution and frame rate mode and the second resolution and frame rate mode without triggering a resynchronization to the video data stream. Furthermore, in addition to or in combination with any of the features described in this or the preceding two paragraphs, the first resolution and frame rate mode may have a vertical pixel width that is twice that of the second resolution and frame rate mode, wherein the second resolution and frame rate mode may have an refresh rate that is twice that of the first resolution and frame rate mode.

Furthermore, in addition to or in combination with any of the features described in this or the preceding three paragraphs with respect to device 600, processor 610 may be configured to receive the trigger to change between the first resolution and frame rate mode and the second resolution and frame rate mode from a runtime operating system or a gaming engine. Furthermore, in addition to or in combination with any of the features described in this or the preceding three paragraphs, processor 610 may be configured to transmit the video data stream to a video display device. Furthermore, in addition to or in combination with any of the features described in this or the preceding three paragraphs, the video data stream in the first resolution and frame rate mode may have a refresh rate that is thrice that of the first resolution and frame rate mode. Furthermore, in addition to or in combination with any of the features described in this or the preceding three paragraphs, the total horizontal pixel width of the video data stream in the first resolution and frame rate mode may include a first active horizontal pixel width and a first horizontal blank pixel width, wherein the total horizontal pixel width of the video data stream in the second resolution and frame rate mode may include a second active horizontal pixel width that is one-third the first horizontal blank pixel width and a second horizontal blank pixel width that is greater than the first horizontal blank pixel width.

Furthermore, in addition to or in combination with any of the features described in this or the preceding four paragraphs with respect to device 600, storage 620 may include a computer memory for storing the video data stream. Furthermore, in addition to or in combination with any of the features described in this or the preceding four paragraphs, the trigger may include a change in content of the video data stream from a static scene to a dynamic scene. Furthermore, in addition to or in combination with any of the features described in this or the preceding four paragraphs, the trigger may include a change in a user preference indicating a resolution or a refresh rate of the video data stream.

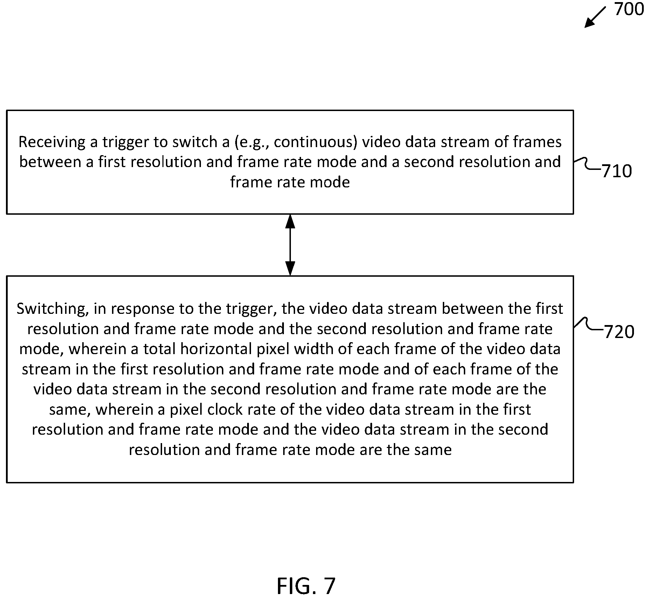

FIG. 7 depicts a schematic flow diagram of a method 700 for zero-latency mode switching of a video data stream. Method 700 may implement any of the features discussed above with respect to zero-latency mode switching and/or FIGs. 1-6. Method 700 includes, in 710, receiving a trigger to switch a (e.g., continuous) video data stream of frames between a first resolution and frame rate mode and a second resolution and frame rate mode. Method 700 also includes, in 720, switching, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same

In the following, various examples are provided that may include one or more aspects described above with reference to the zero-latency mode switching and/or any of FIGs. 1-7. The examples provided in relation to the devices may apply also to the described method(s), and vice versa.

Example 1 is a device including a processor connected to storage. The processor is configured to receive a trigger to switch a (e.g., continuous) video data stream of frames between a first resolution and frame rate mode and a second resolution and frame rate mode. The processor is also configured switch, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

Example 2 is the device of example 1, wherein the second resolution and frame rate mode has a refresh rate that is twice that of the first resolution and frame rate mode.

Example 3 is the device of any one of examples 1 to 2, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

Example 4 is the device of any one of examples 1 to 3, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is half the first horizontal blank pixel width and a second horizontal blank pixel width that is greater than the first horizontal blank pixel width.

Example 5 is the device of example 4, wherein the first active horizontal pixel width is 3840 pixels and the first horizontal blank pixel width is 80 pixels, wherein the second active horizontal pixel width is 1920 pixels and the first horizontal blank pixel width is 2000 pixels.

Example 6 is the device of any one of examples 1 to 5, wherein the first resolution and frame rate mode includes 4K resolution at a refresh rate of 240 Hz, wherein the second resolution and frame rate mode includes 1080p resolution at a refresh rate of 480 Hz.

Example 7 is the device of any one of examples 1 to 6, wherein the processor is configured to switch the video data stream between the first resolution and frame rate mode and the second resolution and frame rate mode without triggering a resynchronization to the video data stream.

Example 8 is the device of any one of examples 1 to 7, wherein the first resolution and frame rate mode has a vertical pixel width that is twice that of the second resolution and frame rate mode, wherein the second resolution and frame rate mode has an refresh rate that is twice that of the first resolution and frame rate mode.

Example 9 is the device of any one of examples 1 to 8, wherein the processor is configured to receive the trigger to change between the first resolution and frame rate mode and the second resolution and frame rate mode from a runtime operating system or a gaming engine.

Example 10 is the device of any one of examples 1 to 9, wherein the processor is configured to transmit the video data stream to a video display device.

Example 11 is the device of any one of examples 1 to 10, wherein the video data stream in the first resolution and frame rate mode has a refresh rate that is thrice that of the first resolution and frame rate mode.

Example 12 is the device of any one of examples 1 to 11, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is one-third the first horizontal blank pixel width and a second horizontal blank pixel width that is greater than the first horizontal blank pixel width.

Example 13 is the device of any one of examples 1 to 12, wherein the storage includes a computer memory for storing the video data stream.

Example 14 is the device of any one of examples 1 to 13, wherein the trigger includes a change in content of the video data stream from a static scene to a dynamic scene.

Example 15 is the device of any one of examples 1 to 14, wherein the trigger includes a change in a user preference indicating a resolution or a refresh rate of the video data stream.

Example 16 is a video display system including a video display and a processor. The processor is configured to transmit a video stream to the video display, wherein the video stream includes first frames in a first resolution and frame rate mode and second frames in a second resolution and frame rate mode, wherein a total horizontal pixel width of each frame of the first frames and of each frame of the second frames is the same, wherein a pixel clock rate of the first frames and of the second frames is the same.

Example 17 is video display system of example 16, wherein the processor is configured to receive a trigger to switch the video stream from the first frames in the first resolution and frame rate mode to the second frames the in the second frames.

Example 18 is video display system of any one of examples 16 to 17, video display system further including a game engine configured to generate the first frames or second frames based on an image content of the video stream.

Example 19 is video display system of any one of examples 16 to 18, wherein the second resolution and frame rate mode has a refresh rate that is twice that of the first resolution and frame rate mode.

Example 20 is video display system of any one of examples 16 to 19, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

Example 21 is video display system of any one of examples 16 to 20, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is half the first horizontal blank pixel width and a second horizontal blank pixel width that is greater than the first horizontal blank pixel width.

Example 22 is video display system of example 21, wherein the first active horizontal pixel width is 3840 pixels and the first horizontal blank pixel width is 80 pixels, wherein the second active horizontal pixel width is 1920 pixels and the first horizontal blank pixel width is 2000 pixels.

Example 23 is video display system of any one of examples 16 to 22, wherein the first resolution and frame rate mode includes 4K resolution at a refresh rate of 240 Hz, wherein the second resolution and frame rate mode includes 1080p resolution at a refresh rate of 480 Hz.

Example 24 is video display system of any one of examples 16 to 23, wherein the processor is configured to switch the video data stream between the first resolution and frame rate mode and the second resolution and frame rate mode without triggering a resynchronization to the video data stream.

Example 25 is video display system of any one of examples 16 to 24, wherein the first resolution and frame rate mode has a vertical pixel width that is twice that of the second resolution and frame rate mode, wherein the second resolution and frame rate mode has an refresh rate that is twice that of the first resolution and frame rate mode.

Example 26 is video display system of any one of examples 16 to 25, wherein the processor is configured to receive the trigger to change between the first resolution and frame rate mode and the second resolution and frame rate mode from a runtime operating system or a gaming engine.

Example 27 is video display system of any one of examples 16 to 26, wherein the processor is configured to transmit the video data stream to the video display device.

Example 28 is video display system of any one of examples 16 to 27, wherein the video data stream in the first resolution and frame rate mode has a refresh rate that is thrice that of the first resolution and frame rate mode.

Example 29 is video display system of any one of examples 16 to 28, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is one-third the first horizontal blank pixel width and a second horizontal blank pixel width that is greater than the first horizontal blank pixel width.

Example 30 is video display system of any one of examples 16 to 29, wherein the storage includes a computer memory for storing the video data stream.

Example 31 is video display system of any one of examples 16 to 30, wherein the trigger includes a change in content of the video data stream from a static scene to a dynamic scene.

Example 32 is video display system of any one of examples 16 to 31, wherein the trigger includes a change in a user preference indicating a resolution or a refresh rate of the video data stream.

Example 33 is a method for zero-latency switching between resolution and frame rate modes. The method includes receiving a trigger to switch a (e.g., continuous) video data stream of frames between a first resolution and frame rate mode and a second resolution and frame rate mode. The method also includes switching, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

Example 34 is the method of example 33, wherein the second resolution and frame rate mode has a refresh rate that is twice that of the first resolution and frame rate mode.

Example 35 is the method of any one of examples 33 to 34, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

Example 36 is the method of any one of examples 33 to 35, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is half the first horizontal blank pixel width and a second horizontal blank pixel width that is greater than the first horizontal blank pixel width.

Example 37 is the method of example 36, wherein the first active horizontal pixel width is 3840 pixels and the first horizontal blank pixel width is 80 pixels, wherein the second active horizontal pixel width is 1920 pixels and the first horizontal blank pixel width is 2000 pixels.

Example 38 is the method of any one of examples 33 to 37, wherein the first resolution and frame rate mode includes 4K resolution at a refresh rate of 240 Hz, wherein the second resolution and frame rate mode includes 1080p resolution at a refresh rate of 480 Hz.

Example 39 is the method of any one of examples 33 to 38, the method further including switching the video data stream between the first resolution and frame rate mode and the second resolution and frame rate mode without triggering a resynchronization to the video data stream.

Example 40 is the method of any one of examples 33 to 39, wherein the first resolution and frame rate mode has a vertical pixel width that is twice that of the second resolution and frame rate mode, wherein the second resolution and frame rate mode has an refresh rate that is twice that of the first resolution and frame rate mode.

Example 41 is the method of any one of examples 33 to 40, the method further including receiving the trigger to change between the first resolution and frame rate mode and the second resolution and frame rate mode from a runtime operating system or a gaming engine.

Example 42 is the method of any one of examples 33 to 41, the method further including transmitting the video data stream to a video display device.

Example 43 is the method of any one of examples 33 to 42, wherein the video data stream in the first resolution and frame rate mode has a refresh rate that is thrice that of the first resolution and frame rate mode.

Example 44 is the method of any one of examples 33 to 43, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is one-third the first horizontal blank pixel width and a second horizontal blank pixel width that is greater than the first horizontal blank pixel width.

Example 45 is the method of any one of examples 33 to 44, the method further including storing (e.g. via a computer memory) the video data stream.

Example 46 is the method of any one of examples 33 to 45, wherein the trigger includes a change in content of the video data stream from a static scene to a dynamic scene.

Example 47 is the method of any one of examples 33 to 46, wherein the trigger includes a change in a user preference indicating a resolution or a refresh rate of the video data stream.

Example 48 is an apparatus for zero-latency switching between resolution and frame rate modes, the apparatus comprising a means for receiving a trigger to switch a (e.g., continuous) video data stream of frames between a first resolution and frame rate mode and a second resolution and frame rate mode. The apparatus also includes a means for switching, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

Example 49 is the apparatus of example 48, wherein the second resolution and frame rate mode has a refresh rate that is twice that of the first resolution and frame rate mode.

Example 50 is the apparatus of any one of examples 48 to 49, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

Example 51 is the apparatus of any one of examples 48 to 50, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is half the first horizontal blank pixel width and a second horizontal blank pixel width that is greater than the first horizontal blank pixel width.

Example 52 is the apparatus of example 51, wherein the first active horizontal pixel width is 3840 pixels and the first horizontal blank pixel width is 80 pixels, wherein the second active horizontal pixel width is 1920 pixels and the first horizontal blank pixel width is 2000 pixels.

Example 53 is the apparatus of any one of examples 48 to 52, wherein the first resolution and frame rate mode includes 4K resolution at a refresh rate of 240 Hz, wherein the second resolution and frame rate mode includes 1080p resolution at a refresh rate of 480 Hz.

Example 54 is the apparatus of any one of examples 48 to 53, the apparatus further includes a means for switching the video data stream between the first resolution and frame rate mode and the second resolution and frame rate mode without triggering a resynchronization to the video data stream.

Example 55 is the apparatus of any one of examples 48 to 54, wherein the first resolution and frame rate mode has a vertical pixel width that is twice that of the second resolution and frame rate mode, wherein the second resolution and frame rate mode has an refresh rate that is twice that of the first resolution and frame rate mode.

Example 56 is the apparatus of any one of examples 48 to 55, the apparatus further including a means for receiving the trigger to change between the first resolution and frame rate mode and the second resolution and frame rate mode from a runtime operating system or a gaming engine.

Example 57 is the apparatus of any one of examples 48 to 56, the apparatus further including a means for transmitting the video data stream to a video display device.

Example 58 is the apparatus of any one of examples 48 to 57, wherein the video data stream in the first resolution and frame rate mode has a refresh rate that is thrice that of the first resolution and frame rate mode.

Example 59 is the apparatus of any one of examples 48 to 58, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is one-third the first horizontal blank pixel width and a second horizontal blank pixel width that is greater than the first horizontal blank pixel width.

Example 60 is the apparatus of any one of examples 48 to 59, the apparatus further including a a means for storing (e.g. a computer memory) the video data stream.

Example 61 is the apparatus of any one of examples 48 to 60, wherein the trigger includes a change in content of the video data stream from a static scene to a dynamic scene.

Example 62 is the apparatus of any one of examples 48 to 61, wherein the trigger includes a change in a user preference indicating a resolution or a refresh rate of the video data stream.

Example 63 is a non-transitory computer-readable medium comprising instructions that, when executed by one or more processors, cause the one or more processors to receive a trigger to switch a (e.g., continuous) video data stream of frames between a first resolution and frame rate mode and a second resolution and frame rate mode. The instructions also cause the one or more processors to switch, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

Example 64 is the non-transitory computer-readable medium of example 63, wherein the second resolution and frame rate mode has a refresh rate that is twice that of the first resolution and frame rate mode.

Example 65 is the non-transitory computer-readable medium of any one of examples 63 to 64, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

Example 66 is the non-transitory computer-readable medium of any one of examples 63 to 65, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is half the first horizontal blank pixel width and a second horizontal blank pixel width that is greater than the first horizontal blank pixel width.

Example 67 is the non-transitory computer-readable medium of example 66, wherein the first active horizontal pixel width is 3840 pixels and the first horizontal blank pixel width is 80 pixels, wherein the second active horizontal pixel width is 1920 pixels and the first horizontal blank pixel width is 2000 pixels.

Example 68 is the non-transitory computer-readable medium of any one of examples 63 to 67, wherein the first resolution and frame rate mode includes 4K resolution at a refresh rate of 240 Hz, wherein the second resolution and frame rate mode includes 1080p resolution at a refresh rate of 480 Hz.

Example 69 is the non-transitory computer-readable medium of any one of examples 63 to 68, wherein the instructions further cause the one or more processors to switch the video data stream between the first resolution and frame rate mode and the second resolution and frame rate mode without triggering a resynchronization to the video data stream.

Example 70 is the non-transitory computer-readable medium of any one of examples 63 to 69, wherein the first resolution and frame rate mode has a vertical pixel width that is twice that of the second resolution and frame rate mode, wherein the second resolution and frame rate mode has an refresh rate that is twice that of the first resolution and frame rate mode.

Example 71 is the non-transitory computer-readable medium of any one of examples 63 to 70, wherein the processor is configured to receive the trigger to change between the first resolution and frame rate mode and the second resolution and frame rate mode from a runtime operating system or a gaming engine.

Example 72 is the device of any one of examples 63 to 71, wherein the instructions further cause the one or more processors to transmit the video data stream to a video display device.

Example 73 is the non-transitory computer-readable medium of any one of examples 63 to 72, wherein the video data stream in the first resolution and frame rate mode has a refresh rate that is thrice that of the first resolution and frame rate mode.

Example 74 is the non-transitory computer-readable medium of any one of examples 63 to 73, wherein the total horizontal pixel width of the video data stream in the first resolution and frame rate mode includes a first active horizontal pixel width and a first horizontal blank pixel width, wherein the total horizontal pixel width of the video data stream in the second resolution and frame rate mode includes a second active horizontal pixel width that is one-third the first horizontal blank pixel width and a second horizontal blank pixel width that is greater than the first horizontal blank pixel width.

Example 75 is the non-transitory computer-readable medium of any one of examples 63 to 74, wherein the instructions further cause the one or more processors to store (e.g. in a storage, a computer memory, etc.) the video data stream.

Example 76 is the non-transitory computer-readable medium of any one of examples 63 to 75, wherein the trigger includes a change in content of the video data stream from a static scene to a dynamic scene.

Example 77 is the non-transitory computer-readable medium of any one of examples 63 to 76, wherein the trigger includes a change in a user preference indicating a resolution or a refresh rate of the video data stream.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising a processor connected to storage, the processor configured to:
receive a trigger to switch a video data stream of frames between a first resolution and frame rate mode and a second resolution and frame rate mode; and
switch, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

2. The device of claim 1, wherein the second resolution and frame rate mode has a refresh rate that is twice that of the first resolution and frame rate mode.

3. The device of any one of claims 1 or 2, wherein the first resolution and frame rate mode has an active horizontal pixel width that is twice that of the second resolution and frame rate mode, wherein the first resolution and frame rate mode has an active vertical pixel height that is twice that of the second resolution and frame rate mode.

4. The device of any one of claims 1 to 3, wherein the total horizontal pixel width of the video data stream in the first resolution and frame rate mode comprises a first active horizontal pixel width and a first horizontal blank pixel width, wherein the total horizontal pixel width of the video data stream in the second resolution and frame rate mode comprises a second active horizontal pixel width that is half the first horizontal blank pixel width and a second horizontal blank pixel width that is greater than the first horizontal blank pixel width.

5. The device of claim 4, wherein the first active horizontal pixel width is 3840 pixels and the first horizontal blank pixel width is 80 pixels, wherein the second active horizontal pixel width is 1920 pixels and the first horizontal blank pixel width is 2000 pixels.

6. The device of any one of claims 1 to 5, wherein the first resolution and frame rate mode comprises 4K resolution at a refresh rate of 240 Hz, wherein the second resolution and frame rate mode comprises 1080p resolution at a refresh rate of 480 Hz.

7. The device of any one of claims 1 to 6, wherein the processor is configured to switch the video data stream between the first resolution and frame rate mode and the second resolution and frame rate mode without triggering a resynchronization to the video data stream.

8. The device of any one of claims 1 to 7, wherein the first resolution and frame rate mode has a vertical pixel width that is twice that of the second resolution and frame rate mode, wherein the second resolution and frame rate mode has an refresh rate that is twice that of the first resolution and frame rate mode.

9. The device of any one of claims 1 to 8, wherein the processor is configured to receive the trigger to change between the first resolution and frame rate mode and the second resolution and frame rate mode from a runtime operating system or a gaming engine.

10. The device of any one of claims 1 to 9, wherein the processor is configured to transmit the video data stream to a video display device.

11. The device of any one of claims 1 to 10, wherein the trigger comprises a change in content of the video data stream from a static scene to a dynamic scene.

12. The device of any one of claims 1 to 11, wherein the trigger comprises a change in a user preference indicating a resolution or a refresh rate of the video data stream.

13. A non-transitory computer-readable medium comprising instructions that, when executed by one or more processors, cause the one or more processors to:
receive a trigger to switch a video data stream of frames between a first resolution and frame rate mode and a second resolution and frame rate mode; and
switch, in response to the trigger, the video data stream between the first resolution and frame rate mode and the second resolution and frame rate mode, wherein a total horizontal pixel width of each frame of the video data stream in the first resolution and frame rate mode and of each frame of the video data stream in the second resolution and frame rate mode are the same, wherein a pixel clock rate of the video data stream in the first resolution and frame rate mode and the video data stream in the second resolution and frame rate mode are the same.

14. The non-transitory computer-readable medium of claim 13, wherein the second resolution and frame rate mode has a refresh rate that is twice that of the first resolution and frame rate mode.
